# EUROPÄISCHE PATENTANMELDUNG

(11) **EP 4 166 512 A1**
(43) Veröffentlichungstag der Anmeldung: **19.04.2023**
(21) Anmeldenummer: 22202205.5
(22) Anmeldetag: 18.10.2022
(51) Int. Cl.: C02F 1/52, C02F 11/123, C02F 103/00

(54) **ABWASSERREINIGUNGSANLAGE, VERWENDUNG UND VERFAHREN ZUR REINIGUNG VON SCHMUTZWASSER**

(30) Priorität: 18.10.2021 DE 102021126969
(71) Anmelder: smart5 envitech GmbH, 79539 Lörrach (DE)
(72) Erfinder: Schlegel, Frank, 79539 Lörrach (DE); Holz, Jochen, 79110 Freiburg im Breisgau (DE); Blank, Daniela, 77972 Mahlberg (DE); Hoffarth, Horst, 96489 Niederfüllbach (DE)
(74) Vertreter: Patentanwälte Olbricht, Buchhold, Keulertz Partnerschaft mbB

(57) **Zusammenfassung**

Die Erfindung betrifft eine Abwasserreinigungsanlage, welche zum Reinigen von Schmutzwasser ausgebildet ist, das insbesondere bei der Reinigung von Sportplätzen entsteht. Die Erfindung betrifft des Weiteren eine zugehörige Verwendung und ein zugehöriges Verfahren.

## Beschreibung

Die Erfindung betrifft eine Abwasserreinigungsanlage, insbesondere für das bei der Reinigung von Sportplätzen anfallende Schmutzwasser, eine zugehörige Verwendung sowie ein zugehöriges Verfahren.

Sportplätze sind häufig als Tartanbahnen oder in anderer Weise mit einer speziellen Beschichtung und/oder Oberfläche ausgeführt, welche für die Sportausübung optimiert ist. Beispielsweise kann damit für einen besonders guten Halt von Sportschuhen gesorgt werden, so dass Unfälle durch Abrutschen vermieden werden.

Derartige Sportplätze befinden sich häufig im Freien und sind somit witterungsbedingter Verschmutzung ausgesetzt. Ein regelmäßiges Reinigen ist deshalb vorteilhaft. Dabei kann Mikroplastik abgespült werden.

Es ist eine Aufgabe der Erfindung, eine Abwasserreinigungsanlage bereitzustellen, welche insbesondere für das bei der Reinigung von Sportplätzen anfallende Schmutzwasser vorteilhaft ausgelegt ist. Es ist des Weiteren eine Aufgabe der Erfindung, ein entsprechendes Verfahren bereitzustellen. Dies wird erfindungsgemäß durch eine Abwasserreinigungsanlage, eine Verwendung und ein Verfahren gemäß den jeweiligen unabhängigen Ansprüchen erreicht. Vorteilhafte Ausführungen sind in den Unteransprüchen beansprucht.

Die Erfindung betrifft eine Abwasserreinigungsanlage, insbesondere für das bei der Reinigung von Sportplätzen anfallende Schmutzwasser. Die Abwasserreinigungsanlage weist folgendes auf:
- einen eingangsseitigen Puffertank mit einer Schmutzwasserzuleitung, wobei der Puffertank dafür vorgesehen ist, zu reinigendes Schmutzwasser vorzuhalten;
- eine Rührvorrichtung, welche dafür vorgesehen ist, das im Puffertank vorgehaltene Schmutzwasser umzurühren;
- eine Dosierstation, welche dafür vorgesehen ist, Flockungsmittel vorzuhalten;
- eine Mischereinheit, die eingangsseitig mit dem Puffertank und der Dosierstation verbunden ist und die Mischereinheit dafür vorgesehen ist, das zu reinigende Schmutzwasser mit dem Flockungsmittel zu durchmischen;
- einen Reaktor, der sich in Fließrichtung des zu reinigenden Schmutzwassers nach der Mischereinheit befindet und der Reaktor dafür vorgesehen ist, dass sich die im Schmutzwasser befindlichen Schmutzpartikel mit dem Flockungsmittel zu abfiltrierbaren Flocken verbinden;
- einen Filter, der sich in Fließrichtung des zu reinigenden Schmutzwassers nach dem Reaktor befindet und der Filter dafür vorgesehen ist, die in Flocken gebundenen Schmutzpartikel vom Schmutzwasser zu trennen;
- einen Klarwassertank, der sich in Fließrichtung des gefilterten Schmutzwassers nach dem Filter befindet und der Klarwassertank dafür vorgesehen ist, das Filtrat aus dem Filter aufzunehmen und der Klarwassertank eine Klarwasserableitung aufweist.

Es hat sich gezeigt, dass eine solche Abwasserreinigungsanlage besonders vorteilhaft dafür ausgelegt ist, dass bei der Reinigung von Sportplätzen anfallende Schmutzwasser zu reinigen. Dies gilt insbesondere mit Bezug auf das Entfernen von Mikroplastik.

Insbesondere kann durch die Rührvorrichtung das im Puffertank vorgehaltene Schmutzwasser laufend durchmischt werden, wodurch sichergestellt wird, dass immer ausreichend zu reinigende Komponenten im weitergeleiteten Schmutzwasser enthalten sind. Die Zugabe von Flockungsmittel erleichtert das Abfiltrieren von Mikroplastik erheblich, sodass der Filter vorteilhaft arbeiten kann.

Unter Mikroplastik können insbesondere kleine Kunststoffteilchen verstanden werden. Diese können entweder bewusst hergestellt werden um bestimmte Funktionen zu erfüllen, beispielsweise in Waschmitteln oder Kosmetika. Sie können jedoch auch unabsichtlich entstehen, beispielsweise durch Abrieb oder Zerfall von größeren Kunststoffteilen. Als untere Grenze der Größe von Mikroplastik kann beispielsweise eine Partikelgröße von 0,5 µm oder 1 µm angenommen werden. Als obere Grenze kann beispielsweise eine Partikelgröße von 5 mm oder 10 mm angenommen werden. Je nach Definition kann beispielsweise auch eine obere Grenze von 1 mm angegeben werden. Mikroplastik kann in der Umwelt schädliche Auswirkungen haben.

Die Klarwasserableitung kann beispielsweise direkt das aufbereitete Klarwasser an einen Verbraucher oder in einen Kanal leiten. Sie kann das Klarwasser auch in einen separaten Frischwassertank überführen, an dem beispielswiese auch eine Stadtwasserzuleitung angeschlossen sein kann. Dies ermöglicht eine flexible Ableitung des Klarwassers, welches bei der beschriebenen Aufbereitung entsteht.

Das hier verwendete Schmutzwasser kann insbesondere aus einer Sportplatzreinigung stammen. Dieses kann typischerweise Mikroplastik enthalten, so dass die hierin beschriebene Reinigung vorteilhaft zum Einsatz kommen kann.

Insbesondere kann vorgesehen sein, dass der Reaktor als Fließreaktor, insbesondere als schlauch- oder rohrleitungsartiger Fließreaktor ausgebildet ist. Dies erlaubt insbesondere einen kontinuierlichen Betrieb des Reaktors. Die gewünschte Reaktion erfolgt dabei, während das Gemisch durch den Reaktor fliest.

Die Länge des Fließreaktors in Verbindung mit der Verarbeitungsleistung der Abwasserreinigungsanlage kann insbesondere so gewählt sein, dass sich das zu reinigende Schmutzwasser mindestens 6 Sekunden, bevorzugt mindestens 10 Sekunden, insbesondere bevorzugt mindestens 12, 20, 30, 45, 60 oder 75 Sekunden in dem Fließreaktors befindet. Derartige Zeiten haben sich für typische Reaktionen zwischen Mikroplastik und Flockungsmittel als vorteilhaft gezeigt.

Insbesondere kann vorgesehen sein, dass das mit Flockungsmittel geimpfte Schmutzwasser ca. 12 Sekunden, ca. 15 Sekunden oder länger in dem beispielsweise mindestens 4 m, bevorzugt mindestens 8 m langen Reaktor oder Schlauch verbleibt. Es ergibt sich bei dem Reaktor ein Doppelnutzen, da einerseits eine Reaktion, andererseits aber auch ein Transport des Schmutzwassers erfolgt.

In einer bevorzugten Ausführung ist vorgesehen, dass das Schutzwasser im Fließreaktors mit einer Geschwindigkeit von mindestens 0,05 m/s, bevorzugt von mindestens 0,075 m/s, insbesondere von mindestens 0,1 m/s fließt. Die Fließgeschwindigkeit im Fließreaktors liegt insbesondere in einem Intervall von 0,05 m/s bis 1,2 m/s, insbesondere von 0,1 m/s bis 0,6 m/s. Diese Geschwindigkeit stellt sicher, dass das Flockungsmittel lang genug mit dem Schmutzwasser reagieren kann. Auch bildet das Schmutzwasser in diesem Geschwindigkeitsbereich im Fließreaktor eine laminare Strömung aus.

Bei einem 8 m langen Fließreaktor ergibt sich bei einer Fließgeschwindigkeit
- von 0,11 m/s eine Verweilzeit von 72,7 s
- von 0,25 m/s eine Verweilzeit von 32,0 s
- von 0,56 m/s eine Verweilzeit von 14,3 s
- von 0,70 m/s eine Verweilzeit von 11,4 s
im Fließreaktor.

Der Fließreaktor kann insbesondere als Mäander ausgebildet sein. Dadurch wird im Vergleich zu einer langgestreckten Ausführung erheblich Platz eingespart. Es können mehrere Windungen eines Mäanders vorgesehen sein. Dies erlaubt insbesondere eine vorteilhafte Anordnung auf einem Anhänger, welcher nur eine begrenzte Länge aufweist.

Die Abwasserreinigungsanlage kann insbesondere mit einer Steuerung ausgestattet sein und die Steuerung kann einerseits mit dem das Schmutzwasser beurteilende Sensoren und andererseits mit Ventilen, Pumpen oder anderen Elementen, wie z.B. einer Speichervorrichtung zur Dokumentation der von den Sensoren ermittelten Messwerten, datentechnisch verbunden sein und steuerungstechnisch zusammenwirken. Dies erlaubt eine vorteilhafte Steuerungs- und/oder Dokumentationsfunktionalität. So kann zum Beispiel Menge und Qualität des zu reinigenden Schmutzwassers, aber auch die Menge von zugeführten Frischwasser dokumentiert werden. Auch das Qualitätsniveau des gereinigten Schmutzwassers, welches wieder für Reinigungszwecke eingesetzt wird, kann hierbei dokumentiert werden. Die Dokumentation dient auch dazu in die Steuerung eingegebene Parameter zu dokumentieren. So kann hinterher zum Beispiel für Analysezwecke aber auch für eine Verbesserung des Algorithmus die gewählten Parameter und die von den Sensoren ermittelten Messwerte miteinander verglichen werden.

Die Anlage kann insbesondere auch mindestens einen Vorratsbehälter für Reinigungsmittel bzw. Desinfektionsmittel umfassen. Der Einsatz von Reinigungs- bzw. Desinfektionsmittel kann auch durch die Steuerung gesteuert werden. Es gibt also vorzugsweise entsprechende Reinigungs-, Spül- oder Desinfektionsprogramme, die in geeigneter Weise auf die verschiedenen Elemente wie Pumpen, Ventile aber auch die dazu notwendige Dosierungsvorrichtung einwirken.

Es kann eine drahtgebundene und/oder eine drahtlose datentechnische Verbindung zwischen der Steuerung einerseits und den Sensoren, Ventilen, Pumpen und/oder anderen Elementen, wie zum Beispiel ein das Schutzwasser erzeugendes Reinigungsgerät, vorgesehen sein.

Gerade bei modulhafter Ausgestaltung der Anlage auf verschiedenen Anhängern hat eine drahtlose Verbindung deutliche Vorteile. Dies erlaubt eine unmittelbare Kommunikation der auf mehrere Anhänger verteilten Einheiten.

Die hier beschriebene Abwasserreinigungsanlage arbeitet gemäß einer vorteilhaften Ausführung zusammen mit einem Gerät, welches das Schmutzwasser produziert, zum Beispiel mit einer Reinigungsvorrichtung, die zur Reinigung der Tartan- oder aus Kunststoffbelägen bestehenden Sportaußenplätze (ohne dabei die Erfindung hierauf beschränken zu wollen, sie ist auch auf Beton- oder Teerplätzen einsetzbar) vorgesehen ist. Nun wird diese Reinigungsvorrichtung über die zu reinigende Fläche geführt, wo hingegen die Abwasserreinigungsanlage, gemäß einer möglichen Ausführung, relativ ortsfest bleibt. Es wird also vorzugsweise eine Steuerung vorgesehen, die sehr flexibel ist, nämlich, dass einerseits das Eingabefeld an der Abwasserreinigungsanlage auch die Reinigungsvorrichtung ein- oder ausschaltet bzw. steuert oder aber an der Reinigungsvorrichtung ist eine Steuerung der Abwasserreinigungsanlage vorgesehen. Eine solche Ausgestaltung erhöht den Bedienungskomfort dieser kompletten Anlage. Auch trägt diese Anordnung dazu bei, Bedienpersonal einzusparen, da eine Bedienperson beide Geräte, die Reinigungsvorrichtung und die Abwasserreinigungsanlage, bedienen kann.

Es kann in der Steuerung auch ein Algorithmus verwendet werden, bei welchem der Durchfluss, also die Pumpleistung, von dem Grad der Trübung des gereinigten Schmutzwassers abhängig gemacht wird. Auch kann der Algorithmus die Menge von beigemischten Flockungsmittel von dem Trübungsgrad abhängig gemacht werden. Die Steuerung wirkt hierbei in geeigneter Weise auf die jeweiligen Förderpumpen und erhält von unterschiedlichen Sensoren die entsprechenden Messwerte, die mit den (durch das Eingabefeld einstellbaren) Parametern im Algorithmus verarbeitet werden. In einer verbesserten Variante kann dabei auch die Menge an angefordertem Klarwasser in diesem Algorithmus berücksichtigt werden.

Gemäß einer vorteilhaften Ausführung kann vorgesehen sein, dass ein Eingabefeld, z.B. für die Eingabe von für den Betrieb der Abwasserreinigungsanlage benötigten Parameter oder die Auswahl von Programmen, für die Steuerung vorgesehen ist, und das vorteilhaft drahtgebunden und/oder durch eine drahtlose datentechnisch Verbindung mit der Steuerung verbunden ist. Dies erlaubt ein einfaches Bedienen der Steuerung.

An oder in der Schmutzwasserzuleitung, beispielsweise vor dem Puffertank, kann ein mit einer Steuerung datentechnisch verbundener Schmutzwassersensor, insbesondere ein Trübungssensor oder ein Durchflussmesssensor angeordnet sein. Dies erlaubt eine Charakterisierung des Schmutzwassers und insbesondere eine darauf basierende Steuerung oder Auswahl von Programmen und Funktionen. Ist das zugeleitete Schmutzwasser erheblich verschmutzt, zum Beispiel sehr trübe, so kann in der Anlage, nach dem Puffertank, die Pumpleistung reduziert werden, wodurch zum einen mehr Zeit für das Reagieren des Flockungsmittels mit den Schmutzpartikeln besteht und zum anderen auch gleichzeitig (bei gleichbleibender Dosierung des Flockungsmittels pro Zeit) der Anteil an Flockungsmittel im Schmutzwasser gesteigert wird. Natürlich ist auch vorgesehen, gegebenenfalls die Förderleistung an Flockungsmittel zu steigern, um einen ausreichenden Klärungsgrad zu erreichen. Idealerweise wirkt dabei der eingangsseitige Schmutzwassersensor in der Steuerung mit einem nach dem Filter angeordneten Trübungssensors zusammen. Dieses Zusammenwirken erfolgt über einen in der Steuerung hinterlegten Algorithmus.

In Fließrichtung des gefilterten Schmutzwassers nach dem Filter kann ein mit einer Steuerung datentechnisch verbundener Schmutzwassersensor, insbesondere ein Trübungssensor, an oder in der Fließleitung des gefilterten Schmutzwassers angeordnet sein.

Der Trübungssensor kann an einer Stelle in der Fließleitung nach dem Filter angeordnet sein. Dies muss nicht zwingend vor dem Klarwassertank sein, der Sensor kann auch strömungsmäßig nach dem Klarwassertank angeordnet sein.

Unter Begriffen wie Schmutzwassersensor oder Frischwassersensor können sehr unterschiedliche Arten von Sensoren verstanden werden. Es kann sich dabei zum Beispiel um einen Sensor handeln, der den pH-Wert, die elektrische Leitfähigkeit, den Sauerstoffgehalt bzw. Sauerstoffsättigung oder die Färbung des Wassers bestimmt. Auch andere Funktionalitäten sind möglich.

Die Dosierstation kann insbesondere mit der Steuerung datentechnisch verbunden sein und die Steuerung kann beispielsweise in Abhängigkeit der Schmutzwasserqualität, insbesondere der Trübung des Schmutzwassers, an der Dosierstation die Dosierung des Flockungsmittels einstellen. Dies erlaubt eine unmittelbare Reaktion auf unterschiedliche Reinigungszustände oder Wasserqualitäten.

Die Abwasserreinigungsanlage kann insbesondere eine, insbesondere mit einem Ventil absperrbare, Frischwasserzuleitung aufweisen. Dies erlaubt, bei Bedarf, die Zufuhr von Frischwasser. Die Frischwasserzuleitung kann beispielsweise eine Zuleitung von Frischwasser erlauben, das von einer kommunalen Wasserversorgung bereitgestellt wird. Damit kann beispielsweise ein Verlust von Wasser ausgeglichen werden, welcher beim Reinigen typischerweise auftritt.

Ein solches Ventil kann insbesondere verhindern, dass verschmutztes Wasser in die Frischwasserzuleitung zurückgespült wird und dann die Frischwasserzuleitung kontaminiert. Dies kann zum Beispiel ein Rückschlagventil oder ein anderes geeignetes Ventil sein.

Insbesondere kann vorgesehen sein, dass in Fließrichtung des gefilterten Schmutzwassers nach dem Klarwassertank, insbesondere durch die Klarwasserableitung verbunden, ein Frischwassertank vorgesehen ist, an dem die Frischwasserzuleitung angeschlossen ist. Dies erlaubt eine Zuführung von Frischwasser an dieser Stelle, wodurch beispielsweise das gereinigte Schmutzwasser (= Klarwasser) verdünnt werden kann.

Es ist jedoch auch möglich, die Frischwasserzuleitung an anderen Stellen anzuschließen. Grundsätzlich kann sie an allen Stellen angeschlossen werden, an welchen eine Funktionalität wie beispielsweise eine Verdünnung von Schmutzwasser wünschenswert ist.

An oder in der Frischwasserzuleitung kann insbesondere ein mit der Steuerung datentechnisch verbundener Frischwassersensor, insbesondere ein Trübungssensor oder ein Durchflussmesssensor angeordnet sein. Dies erlaubt eine Erfassung von Trübung und/oder Durchfluss und eine entsprechende Verwendung dabei gewonnener Daten zur Steuerung.

Ein Trübungssensor kann insbesondere die Transmission des Lichtes messen. Grundsätzlich können auch andere Typen von Sensoren verwendet werden.

Die Abwasserreinigungsanlage kann insbesondere eine Dosierstation aufweisen, welche dafür vorgesehen ist, Reinigungsmittel, Desinfektionsmittel und/oder Biozide vorzuhalten und/oder die Abwasserreinigungsanlage kann eine Dosierstation aufweisen, welche dafür vorgesehen ist, Entschäumer vorzuhalten und diese Dosierstation/en können insbesondere mit der Steuerung datentechnisch verbunden sein.

Diese eben beschriebenen zusätzlichen Dosierstationen können einzeln oder beide verwendet werden. Es können auch weitere Dosierstationen verwendet werden. Diese können ihre jeweilige Substanz in die Mischereinheit abgeben. Sie können jedoch auch dazu ausgebildet sein, ihre jeweilige Substanz in den Frischwassertank und/oder in den Klarwassertank abzugeben.

Der Filter kann insbesondere als Bandfilter ausgebildet sein. Dabei handelt es sich beispielsweise um ein Vlies, das im Endlosprinzip, umlaufend geführt ist und von oben mit einem mit dem Flockungsmittel geimpften Schmutzwasser befrachtet wird. Alternativ ist es auch mögliche ein Edelstahlgewebe zu verwenden. Die Verweildauer des Flockungsmittels im Schmutzwasser ist dabei schon so lang, dass sich bereits zumindest erste Flocken gebildet haben, die das Mikroplastik binden. Ein Bandfilter kann insbesondere kontinuierlich oder diskontinuierlich abgesetzte Flocken oder anderen Schmutz abtransportieren, was eine besonders lange Nutzungsdauer ermöglicht.

Gerade die Kombination des Bandfilters mit dem Einsatz von Flockungsmittel erscheint besonders vorteilhaft, da ein kontinuierliches effizientes Ausfiltern ermöglicht wird.

Das eingesetzte Flockungsmittel bildet insbesondere Flocken, und dieses Material fällt nicht durch den Bandfilter. Weiter nachfolgendes Material tropft insbesondere auf die erste Schicht von Flocken und das Schmutzwasser hat dann Zeit diese erste Schicht von Flocken ebenfalls zu durchdringen und dort gegebenenfalls auch noch Flocken zur Abscheidung des Mikroplastiks zu bilden. Daher ist die Steuerung auch so ausgebildet, dass der Bandfilter erst dann weitertransportiert wird, wenn der Pegelstand im darunterliegenden Klarwassertank zu weit absinkt.

Es können jedoch auch andere Filter als Bandfilter verwendet werden.

Alternativen zum Bandfilter sind beispielsweise Lamellenfilter (erlaubt auch einen kontinuierlichen Prozess), Schrägklärer, Lamellenklärer, Elektrofilter oder Elektrokoagulation. Die Filter können zum Beispiel zur kapazitiven Ausweitung parallel angeordnet sein. Außerdem kann eine mehrstufige Filterung vorgesehen sein, welche insbesondere bessere Filterergebnisse liefert.

Der Bandvorschub kann insbesondere automatisch erfolgen, beispielsweise gesteuert über einen Schwimmerschalter. Dies ermöglicht einen automatisierten und effizienten Betrieb des Bandfilters. Beispielsweise kann der Bandvorschub im Bandfilter aktiviert werden, wenn der Schwimmerschalter einen zu geringen Pegelstand anzeigt, welcher auf einen zu geringen Durchlauf durch den Bandfilter hinweist.

Neben dem Filter kann ein Auffangbehälter für die in Flocken gebundenen Schmutzpartikel vorgesehen sein. Dies erlaubt eine zuverlässige Lagerung der schlammartigen Flocken.

Die Abwasserreinigungsanlage kann insbesondere im Puffertank, Klarwassertank und/oder Frischwassertank je einen Pegelsensor aufweisen, der/die datentechnisch mit der Steuerung verbunden ist/sind. Dieser Pegelsensor kann beispielsweise zur Steuerung des bereits erwähnten Bandfilters verwendet werden. Ist der Pegel zu gering, kann das darauf hinweisen, dass der Bandfilter zugesetzt ist.

Der Puffertank kann insbesondere einen schrägen bzw. geneigten Boden aufweisen. Dies erlaubt ein einfaches Reinigen und/oder eine Entnahme von abgesetztem Schmutz.

Es ist zwar typischerweise nicht erwünscht, dass im Puffertank ein Schlammabsetzen erfolgt, wobei ein solches Schlammabsetzen typischerweise durch das Rührwerk verhindert oder vermindert wird. Trotzdem ist ein gewisses Schlammabsetzen typischerweise unvermeidlich. Ein geneigter Boden erleichtert das Entleeren des Puffertanks, beispielsweise über ein entsprechendes Ablassventil.

Der Puffertank kann in einer Variante auch einen Vor- und einen Haupttank aufweisen, und der Vortank kann zum Beispiel für das Absetzen von Sand oder Schlamm genutzt werden. Eigentlich aber ist es das Ziel der Anordnung, dass insbesondere durch die Rührvorrichtung die Schwebteile erst am Filter anfallen und dort gesammelt werden.

Insbesondere können als Flockungsmittel Polyaluminiumchlorid-Lösungen, ein anionisches Flockungshilfsmittel, wie z.B. Polyacrylate oder Polymethylacrylate, ein kationisches Flockungshilfsmittel, wie z.B. Polyethylenimin, polymere Verbindungen mit quarternären Ammoniumverbindungen, ein mineralisches Flockungsmittel wie z.B. Metallsalze, Aluminiumsulfat, Eisen(III)chlorid, Aluminiumchlorid und/oder nichtionogene Polymere, wie z.B. Polyacrylamid, Polyvinylalkohol, Polyethylenoxid vorgesehen sein. Derartige Substanzen haben sich als vorteilhaft erwiesen. Auch andere Substanzen können jedoch verwendet werden.

Vorteilhaft kann eine Heizung für das Flockungsmittel vorgesehen sein. Dies erlaubt es, das Flockungsmittel auf eine zur Verwendung und/oder zum Fließen geeignete Temperatur zu heizen. Manche Flockungsmittel sind bei Raumtemperatur sehr zähfließend, erwärmtes Flockungsmittel fließt dann typischerweise besser. Die Heizung kann beispielsweise eine Mantelheizung um die Rohrleitung des Flockungsmittels herum sein. Daher umfasst der Vorschlag auch alternativ eine Heizung für die das Flockungsmittel leitende Leitung. Vorteilhafter Weise ist dabei die Heizung oder die mit der Heizung verbundene Steuerung mit einem Temperatursensor verbunden. Unterschreitet die Umgebungstemperatur, oder die Temperatur der zu fördernden Flüssigkeit (Flockungsmittel oder Reinigungs- bzw. Desinfektionsmittel, vorteilhafterweise kurz vor der Mischereinheit gemessen) einen entsprechenden (einstellbaren) Temperaturparameter, so besteht die Gefahr, dass das Flockungsmittel oder auch andere durch die Dosierstation vorgehaltenen und abgegebenen Flüssigkeiten, wie Reinigungsmittel oder Desinfektionsmittel, zu zähflüssig und damit zu ineffizient werden. In diesem Fall schaltet die Steuerung die Heizung ein und ein insbesondere in Fließrichtung nach der Heizung angeordneter weitere Temperatursensor ermittelt die Temperatur der Flüssigkeit. So wird ein entsprechender Regelkreis aufgebaut.

Des Weiteren ist auch in einer Weiterentwicklung vorgesehen, dass auch der Puffertank mit einer (überwachten und regelbaren) Heizung ausgestattet ist, um z.B. das Schmutzwasser vor der Impfung mit dem Flockungsmittel zu temperieren. Die Heizung kann zum Beispiel als Patronen- oder Rohrmantelheizung ausgebildet sein, wobei zum Beispiel auch die Rohrleitung von dem Puffertank zur Mischereinheit mit einer entsprechenden Heizung ausgestattet ist.

Gemäß einer vorteilhaften Ausführung kann vorgesehen sein, dass sich alle Elemente der Abwasserreinigungsanlage auf einem oder mehreren selbstfahrenden Fahrzeug/e oder auf einem oder mehreren, durch ein selbstfahrendes Fahrzeug gezogene/n Anhänger angeordnet sind.

Eine solche Ausführung kann auch modular sein. Dies kann insbesondere bedeuten, dass sich einzelne Elemente auf unterschiedlichen Anhängern befinden können. Dies erlaubt beispielsweise die Verwendung größerer Komponenten und damit eine leistungsfähigere Ausführung als bei Integration aller Komponenten auf nur einem Anhänger. Die Anhänger können bei Benutzung beispielsweise nebeneinandergestellt werden und können mittels Schläuchen und/oder Kabeln miteinander verbunden werden.

Durch eine solche Ausführung ist zum Beispiel auch eine kapazitive Anpassung einzelner Elemente der Abwasserreinigungsanlage an spezielle Anwendungsfälle, beispielsweise zwei oder mehrere Filter parallel, möglich. Es kann auch eine redundante Ausstattung, beispielsweise von fragilen Elementen, vorgesehen sein. Dies sichert die Einsetzbarkeit, wobei der Modulaufbau die schnelle Austauschbarkeit erleichtert.

Die Erfindung betrifft des Weiteren eine Verwendung einer Abwasserreinigungsanlage insbesondere wie hierin beschrieben für die Reinigung von mit Mikroplastik verschmutztem Schmutzwasser, wobei insbesondere als Filter ein Bandfilter und als Flockungsmittel ein anionisches, ein mineralisches oder ein nichtionogenes Flockungsmittel verwendet wird. Bezüglich der Abwasserreinigungsanlage sind alle beschriebenen Varianten möglich.

Die Verwendung eines Bandfilters bringt die weiter oben beschriebenen Vorteile mit sich. Insbesondere kann der Bandfilter so ausgeführt sein, dass er einen automatischen Abtransport von abgeschiedenen Flocken und Schmutz erlaubt. Es können jedoch auch andere Ausführungen von Filtern verwendet werden.

Die Verwendung der angegebenen Flockungsmittel hat sich für die typischen Reinigungsaufgaben im Rahmen einer Sportplatzreinigung als besonders vorteilhaft herausgestellt. Insbesondere lassen sich die damit erzeugen Flocken oder Ausfällungen besonders vorteilhaft mit dem erwähnten Bandfilter ausfiltern. Auch andere Flockungsmittel können jedoch verwendet werden. Bezüglich möglicher Flockungsmittel oder sonstiger verwendeter Substanzen sein insbesondere auf die weiter oben hierzu gegebenen Ausführungen verwiesen.

Gerade die Kombination eines Bandfilters mit dem vorgeschlagenen Flockungsmittel ergibt ein sehr überzeugendes reiches Ergebnis, da insbesondere die Möglichkeit besteht, dass der Filterkuchen auf dem Bandfilter mit Flockungsmittel geimpften Schmutzwasser weiter reagiert und in effizienter Weise zusätzliches Schmutzpartikel aus dem zu reinigende Schmutzwasser entfernt.

Die Erfindung betrifft des Weiteren ein Verfahren zur Reinigung des bei der Reinigung insbesondere von Sportplätzen anfallenden Schmutzwassers mit einer Abwasserreinigungsanlage, insbesondere wie hierin beschrieben bzw. gemäß einer hierin beschriebenen Ausführung, wobei
- verunreinigtes Schmutzwasser in mindestens einem eingangsseitigen Puffertank gesammelt wird und
- andauernd in diesem umgerührt wird und
- in Fließrichtung des verunreinigten Schmutzwassers nach dem Puffertank eine Mischereinheit vorgesehen ist,
- die aus einem in einer Dosierstation vorgehaltenem Flockungsmittel dosierbar dem Schmutzwasser zumischt und
- hernach in mindestens einem Reaktor die sich im Schmutzwasser befindlichen Schmutzpartikel mit dem Flockungsmittel zu abfiltrierbaren Flocken verbinden,
- die dann in einem Filter von dem zu reinigenden Schmutzwasser abfiltriert werden.

In diesem Zusammenhang wird insbesondere darauf hingewiesen, dass alle in Bezug auf die Vorrichtung, also der Abwasserreinigungsanlage beschriebenen Merkmale und Eigenschaften aber auch Verfahrensweisen sinngemäß auch bezüglich der Formulierung des erfindungsgemäßen Verfahrens bzw. Verwendung übertragbar und im Sinne der Erfindung einsetzbar und als mitoffenbart gelten. Gleiches gilt auch in umgekehrter Richtung, das bedeutet, nur in Bezug auf das Verfahren bzw. Verwendung genannte, bauliche also vorrichtungsgemäße Merkmale können auch im Rahmen der Vorrichtungsansprüche, bezogen auf die beanspruchte Abwasserreinigungsanlage berücksichtigt und beansprucht werden und zählen ebenfalls zur Offenbarung.

Die Erfindung wird nachfolgend anhand der Figuren beschrieben. Dabei zeigen:
Fig. 1: einen Schaltplan einer Abwasserreinigungsanlage, und
Fig. 2: eine schematische Ansicht einer Abwasserreinigungsanlage.

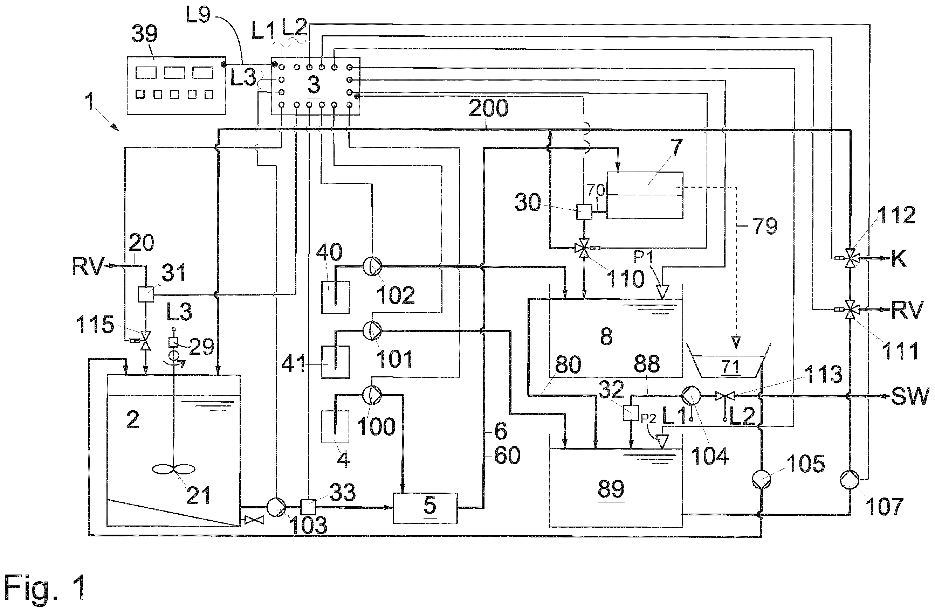

Fig. 1 zeigt einen hydraulischen Schaltplan einer Abwasserreinigungsanlage 1 gemäß einem Ausführungsbeispiel der Erfindung.

Eingangsseitig weist die Abwasserreinigungsanlage 1 zunächst einen Puffertank 2 auf. In diesen mündet eine Schmutzwasserzuleitung 20. Diese fördert Schmutzwasser von einer Reinigungsvorrichtung RV in den Puffertank 2. Die Reinigungsvorrichtung RV ist nicht näher dargestellt und beschrieben. Sie kann beispielsweise dazu ausgebildet sein, einen Sportplatz wie eine Tartanbahn zu reinigen und dabei entstehendes Schmutzwasser in der Abwasserreinigungsanlage 1 reinigen zu lassen. Die eingangsseitige Qualität des Schmutzwassers kann über den (Trübungs) Sensor 31 bestimmt werde, der mit der Steuerung 3 datentechnisch verbunden ist. Die Schmutzwasserzuleitung 20 ist mit einem, mit der Steuerung 3 datentechnisch verbundenen Ventil 115 vom Puffertank 2 abtrennbar.

In dem Puffertank 2 ist eine Rührvorrichtung 21 ausgebildet. Diese sorgt für eine laufende Durchmischung des im Puffertank 2 gelagerten Schmutzwassers. Der Antrieb 29 der Rührvorrichtung 21 ist über die Leitung L3 zumindest datentechnisch mit der Steuerung 3 verbunden.

Fluidisch nach dem Puffertank 2 ist eine Mischereinheit 5 angeordnet. Das Schmutzwasser wird dabei mit der Pumpe 103 in die Mischereinheit 5 gepumpt. Die Pumpe 103 ist mit der Steuerung 3 datentechnisch verbunden, hierüber kann der Fluss an Schmutzwasser durch die Abwasserreinigungsanlage 1 und damit auch die Strömungsgeschwindigkeit bzw die Verweilzeit des Schmutzwassers im Fließreaktor 60 (siehe unten) geregelt werden. Die Qualität bzw. Verschmutzungsgrad des Schmutzwassers wird über den (Trübungs-) Sensor 33 bestimmt, der mit der Steuerung 3 datentechnisch verbunden ist. Über den hier gemessenen Wert ist es möglich, die Dosierung an Flockungsmittel in der Mischereinheit 5 einerseites und/oder den Fluss an Schmutzwasser, also die Pumpleistung der Pumpe 103 durch die Abwasserreinigungsanlage 1 andereseits zu regeln. Durch diese wird aus dem Puffertank 2 abgelassenes Schmutzwasser geleitet, um es mit einem Flockungsmittel zu vermischen. Hierfür ist eine Dosierstation 4 vorgesehen, welche Flockungsmittel bevorratet und mittels einer Pumpe 100 in die Mischereinheit 5 fördert.

Zusätzlich dazu ist auch noch eine weitere Dosierstation 40 vorgesehen, welche Reinigungsmittel, Desinfektionsmittel und/oder Biozide bevorratet und über eine Pumpe 102 in die Mischereinheit 5 fördern kann. Außerdem ist auch noch eine weitere Dosierstation 41 vorgesehen, welche Entschäumer bevorratet und über eine Pumpe 101 in die Mischereinheit 5 fördern kann. Da die Pumpen 100,101, und 102 Daten technisch mit der Steuerung 3 verbunden sind können diese über die Steuerung 3 entsprechend geregelt werden. Auch ist es möglich, über entsprechende in der Steuerung 3 hinterlegten Reinigungs-, Spül- oder Desinfektionsprogramme aufzurufen, die dann in geeigneter Weise den Abzug von Schmutzwasser aus dem Puffertank 2 beenden.

In der Mischereinheit 5 wird das Schmutzwasser mit den zugeführten Komponenten vermischt. Fluidisch nachgeschaltet ist ein Reaktor 6, welcher vorliegend als Fließreaktor 60 ausgeführt ist. Letztlich handelt es sich bei der vorliegenden Ausführung des Reaktors 6 um ein Rohr, durch welches das Schmutzwasser nach Zumischung der erwähnten Komponenten fließt, so dass es für mindestens etwa 12 bis 15 Sekunden, bevorzugt mindestens 20 bis mindestens 60 Sekunden darin verbleibt. Dabei erfolgt ein Ausflocken von im Schmutzwasser enthaltener Mikroplastik mit dem Flockungsmittel.

Anschließend gelangt das Schmutzwasser auf einen Filter 7. Dieser ist vorliegend als Bandfilter ausgebildet. Dies bedeutet, dass das Schmutzwasser auf eine Oberseite eines Bands gelangt, in welchem Löcher ausgebildet sind. Durch diese kann Wasser durchfließen, jedoch bleibt ausgeflocktes Material, und somit insbesondere Mikroplastik, auf dem Filter liegen. Der Filter 7 kann dann in Bewegung versetzt werden, so dass das Material in ein seitlich dazu gelegenes Reservoir 71 fällt (siehe gestrichelten Pfeil 79), in welchem es gesammelt und anschließend entsorgt werden kann. Dabei mitgeleitetes Wasser kann über eine Pumpe 105 in den Puffertank 2 zurückgeleitet werden. Sowohl der Antrieb des Bandfilters, wie auch die Pumpe 105 sind datentechnisch mit der Steuerung 3 verbunden.

Nach dem Filter 7 befindet sich ein Drei-Wege-Ventil 110, welches das gefilterte Schmutzwasser entweder zurück in den Puffertank 2 oder zu einem Klarwassertank 8 leiten kann. Ersteres kann verwendet werden, wenn eine nochmalige Reinigung erfolgen soll. Der Reinheitsgrad kann hierzu mittels eines Trübungssensors 30 beurteilt werden, welcher an einer Fließleitung 70 zwischen Filter 7 und Drei-Wege-Ventil 110 angeordnet ist. Ist das gefilterte Schmutzwasser rein genug, so kann es in den Klarwassertank 8 geleitet werden. In diesem wird gereinigtes Schmutzwasser gesammelt. Dabei ist hier ein einfacher Regelkreis aufgebaut. Der Trübungssensor 30 ermittelt den Trübungsgrad des gereinigten Schmutzwassers nach dem Filter/Bandfilter 7. Dabei ist der Trübungssensor 30 mit der Steuerung 3 verbunden. Auch das Drei-Wege-Ventil 110 ist mit der Steuerung 3 verbunden. Für eine Leitung des Schmutzwassers (entweder in den Puffertank 2 oder den Klarwassertank 8) sind Pumpen vorgesehen, die auch mit der Steuerung 3 verbunden sind, hier aber nicht aus Übersichtlichkeitsgründen nicht gezeigt sind.

Am Klarwassertank 8 ist eine Klarwasserableitung 80 angeschlossen, durch welche das Klarwasser in einen Frischwassertank 89 gelangen kann. An diesem ist auch eine Frischwasserzuleitung 88 mit Ventil 113 und Pumpe 104 angeschlossen, um zusätzliches Frischwasser, beispielsweise aus einer öffentlichen Wasserversorgung (SW = Stadtwasser), in den Frischwassertank 89 zu pumpen. Sowohl das Ventil 113 wie auch die Pumpe 104 sind mit der Steuerung 3 verbunden. Dies ist mit den Leitungen L1 und L2 angedeutet. Damit kann die Qualität des Klarwassers verbessert und der Verlust von Schmutzwasser ausgeglichen werden. Die Qualität des zugeleiteten Frischwassers kann mittels eines Trübungssensors 32 überwacht werden.

Vom Frischwassertank 89 aus kann auch Klarwasser über eine Pumpe 107 und zwei Drei-Wege-Ventile 111, 112 zurück in den Puffertank 2 geleitet werden. Die Drei-Wege-Ventile 111, 112 sind hierzu ebenfalls mit der Steuerung 3 verbunden. Ein Rückpumpen von Wasser in den Puffertank 2 ist zum Beispiel dann geboten, um entweder noch zu schmutziges Klarwasser nochmals durch die Reinigungsanlage laufen zu lassen oder aber die Reinigungsanlage zu reinigen bzw. klar zu spülen. Von diesen Drei-Wege-Ventilen 111, 112 kann auch Wasser zum Kanal K (für Entleerungs- oder Entsorgungszwecke) und/oder zur Reinigungsvorrichtung RV geleitet werden, um das Wasser für die Reinigung wiederzuverwenden.

Im Zusammenhang mit der Frischwasserzuleitung 88 lässt sich die Rückführung zur Reinigungsvorrichtung RV besonders vorteilhaft nutzen, da im Betrieb typischerweise ein Teil des Wassers verloren geht, beispielsweise durch Wegspritzen oder Einsickern in den Boden. Dieses Wasser kann so auf einfache Weise nachgefüllt werden.

Die Abwasserreinigungsanlage 1 weist ferner eine Steuerung 3 auf. Diese ist über ein Eingabefeld 39 steuerbar und mit den Sensoren 30, 31, 32 datenmäßig verbunden, so dass Ausgangssignale der Sensoren 30, 31, 32 ausgewertet und für die Steuerung (3) verwendet werden können. Das Eingabefeld 39 ist von der Steuerung 3 getrennt ausgeführt und durch die Leitung L9, drahtlos oder drahtgebunden, mit der Steuerung 3 datentechnisch verbunden. Die Steuerung 3 kann auch die Ventile und Pumpen steuern und kann somit unmittelbar auf erkannte Verschmutzungsgrade reagieren. Insbesondere kann zu unreines Schmutzwasser wieder in den Puffertank 2 geleitet werden, ausreichend gereinigtes Wasser kann hingegen an die Reinigungsvorrichtung RV zurückgegeben werden. Bei Bedarf kann Frischwasser nachgefüllt werden.

Sowohl der Klarwassertank 8 wie auch der Frischwassertank 89 sind je mit einem Pegelsensor P1, bzw. P2 ausgestattet, über den die jeweiligen Pegelstände in den Tanks 8, 89 an die Steuerung 3 übermittelt werden. Sinkt der mit dem Pegelsensor P1 im Klarwassertank 8 gemessene Pegel zu weit ab, dann wird das Band des Bandfilters 7 weitertransportiert.

Der Puffertank 2 hat, wie gezeigt, einen schrägen Boden. Dies erleichtert die Reinigung des Puffertanks 2, wenn sich beispielsweise Schlamm am Boden abgesetzt hat. Hierzu ist seitlich ein (vorzugsweise mit der Steuerung 3 verbundenes) Ventil 114 vorgesehen.

Ist die Aufbereitung von Schmutzwasser abgeschlossen, weil zum Beispiel die Reinigung mit der daran angeschlossenen Reinigungsvorrichtung abgeschlossen ist, dann wird in einem ersten Schritt die Abwasserreinigungsanlage 1 geleert. Dabei wird zunächst das gesamte Schmutzwasser aus dem Puffertank 2 in bekannter Weise mit dem Flockungsmittel versetzt und im Bandfilter 7 gereinigt. Wird im Trübungssensor 30 noch eine zu starke Trübung festgestellt, so wird bereits an dieser Stelle das erstmalig gereinigte Schmutzwasser gleich wieder dem Puffertank 2 zugeleitet. Ist der Trübungsgrad ausreichen, um dieses Wasser in den Kanal K abzuleiten, so wird dieses Wasser an dem Drei-Wege-Ventil 110 über den Klarwassertank 8 in den Frischwassertank 89 gepumpt und von dort aus mithilfe der Pumpe 107 in den Kanal K.

Nachdem die Abwasserreinigungsanlage 1 geleert ist, wird diese gereinigt und gegebenenfalls desinfiziert. Hierzu wird aus der Frischwasserzuleitung 88, aus dem öffentlichen Netzwerk, Frischwasser zugeleitet, welches über den Frischwassertank 89, die Pumpe 103 und die Leitung 200 in dem Puffertank 2 gepumpt wird. Dieser Reinigungs- bzw. Desinfektionsschritt wird idealerweise von der Steuerung 3 überwacht und die Steuerung 3 schaltet dann die Pumpe 100 für die Dosierung des Flockungsmittels aus der Dosierstation 4 aus und dafür die Pumpe 102 für das Beimischen von Reinigungsmittel aus der Dosierstation 40 an. Letzteres ist natürlich auch für das Desinfektionsmittel möglich. Üblicherweise läuft der Reinigungs- bzw. Desinfektionsprozess zeitgesteuert, d.h. die jeweiligen Mittel wirken eine gewisse Zeit an den jeweiligen Elementen ein und werden dann über den vorgeschriebenen Weg in den Kanal K abgeleitet.

Am Ende ist natürlich auch noch ein Spülvorgang mit Frischwasser aus dem öffentlichen Netz, über dem beschriebenen Weg, möglich.

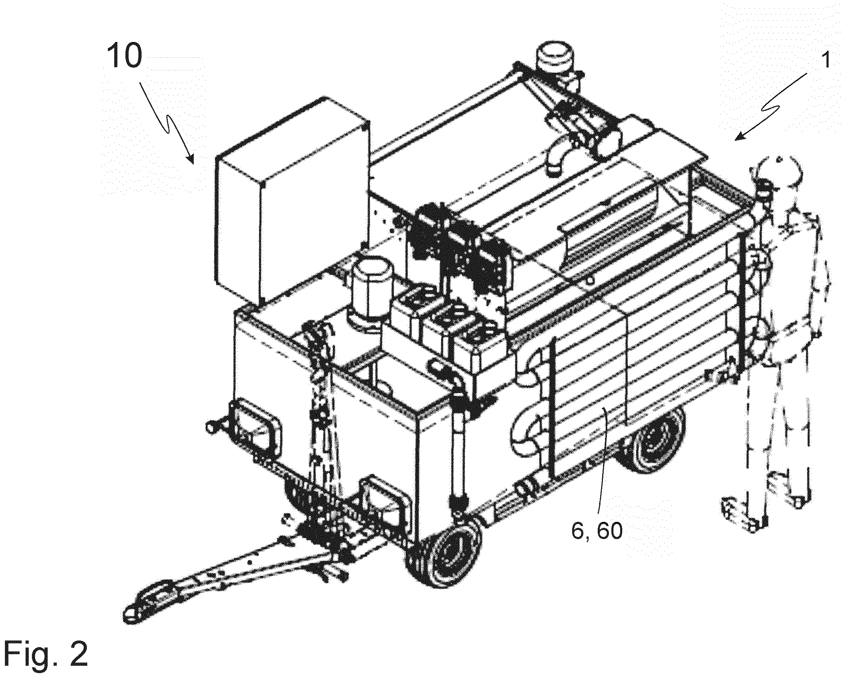

Fig. 2 zeigt einen Anhänger 10, auf welchem die bereits beschriebene Abwasserreinigungsanlage 1 angeordnet ist. Dies erlaubt eine vorteilhafte Mobilität, da der Anhänger einfach von einem Zugfahrzeug gezogen und an einen gewünschten Ort, beispielsweise neben einer zu reinigenden Sportplatzfläche, verbracht werden kann.

Dabei ist auch die Ausführung des Reaktors 6 als aus Rohrstücken gebildeten, mäanderförmig angeordneten Fließreaktor 60 gut zu sehen. Dieser ist als Mäander ausgeführt, was bedeutet, dass er mehrfach gefaltet ist. Dies erlaubt eine besonders gute Bauraumausnutzung. Es wechseln sich jeweils Strecken mit Krümmern ab, wobei die Krümmer für eine jeweilige Biegung um 180° sorgen, so dass die Strecken parallel zueinander sind. Die Strecken sind übereinander angeordnet und nutzen somit den in der Höhe zur Verfügung stehenden Bauraum, ohne dabei in der Fläche einen großen Platzbedarf zu haben.

### Bezugszeichenliste

1 Abwasserreinigungsanlage
10 Anhänger
2 Puffertank
20 Schmutzwasserzuleitung
21 Rührvorrichtung
29 Antrieb
3 Steuerung
30 Trübungssensor
31 Sensor
32 Trübungssensor
33 Sensor
39 Eingabefeld
4 Dosierstation
40 Dosierstation
41 Dosierstation
5 Mischereinheit
6 Reaktor
60 Fließreaktor
7 Filter/Bandfilter
70 Fließleitung
71 Reservoir
79 Pfeil
8 Klarwassertank
80 Klarwasserableitung
88 Frischwasserzuleitung
89 Frischwassertank
100 Pumpe
101 Pumpe
102 Pumpe
103 Pumpe
104 Pumpe
105 Pumpe
107 Pumpe
110 Drei-Wege-Ventil
111 Drei-Wege-Ventil
112 Drei-Wege-Ventil
113 Ventil
114 Ventil
115 Ventil
K Leitung
K Kanal
L1 Leitung
L2 Leitung
L3 Leitung
L9 Leitung
P1 Pegelsensor
P2 Pegelsensor
RV Reinigungsvorrichtung
SW Stadtwasserzuleitung

## Patentansprüche

1. Abwasserreinigungsanlage, insbesondere für das bei der Reinigung von Sportplätzen anfallenden Schmutzwasser, wobei die Abwasserreinigungsanlage (1) folgendes aufweist:
- einen eingangsseitigen Puffertank (2) mit einer Schmutzwasserzuleitung (20), wobei der Puffertank (2) dafür vorgesehen ist, zu reinigendes Schmutzwasser vorzuhalten
- eine Rührvorrichtung (21), welche dafür vorgesehen ist, das im Puffertank (2) vorgehaltene Schmutzwasser umzurühren
- eine Dosierstation (4), welche dafür vorgesehen ist, Flockungsmittel vorzuhalten
- eine Mischereinheit (5), die eingangsseitig mit dem Puffertank (2) und der Dosierstation (4) verbunden ist und die Mischereinheit (5) dafür vorgesehen ist, das zu reinigende Schmutzwasser mit dem Flockungsmittel zu durchmischen
- einen Reaktor (6), der sich in Fließrichtung des zu reinigenden Schmutzwassers nach der Mischereinheit (5) befindet und der Reaktor (6) dafür vorgesehen ist, dass sich die im Schmutzwasser befindlichen Schmutzpartikel mit dem Flockungsmittel zu abfiltrierbaren Flocken verbinden
- einen Filter (7), der sich in Fließrichtung des zu reinigenden Schmutzwassers nach dem Reaktor (6) befindet und der Filter (7) dafür vorgesehen ist, die in Flocken gebundenen Schmutzpartikel vom Schmutzwasser zu trennen
- einen Klarwassertank (8), der sich in Fließrichtung des gefilterten Schmutzwassers nach dem Filter (7) befindet und der Klarwassertank (8) dafür vorgesehen ist, das Filtrat aus dem Filter (7) aufzunehmen und der Klarwassertank (8) eine Klarwasserableitung (80) aufweist.

2. Abwasserreinigungsanlage nach Anspruch 1, **dadurch gekennzeichnet, dass** der Reaktor (6) als Fließreaktor (60), insbesondere als schlauch- oder rohrleitungsartiger Fließreaktor (60) ausgebildet ist und/oder der Fließreaktors (60) als Mäander ausgebildet ist.

3. Abwasserreinigungsanlage nach einem der vorhergehenden Ansprüche, **dadurch gekennzeichnet, dass** die Länge des Fließreaktors (60) in Verbindung mit der Verarbeitungsleistung der Abwasserreinigungsanlage (1) so gewählt ist, dass sich das zu reinigende Schmutzwasser mindestens 6 Sekunden, bevorzugt mindestens 10 Sekunden, insbesondere bevorzugt mindestens 12 Sekunden in dem Fließreaktor (60) befindet_und/oder das Schutzwasser im Fließreaktors (60) mit einer Geschwindigkeit von mindestens 0,05 m/s, bevorzugt von mindestens 0,075 m/s, insbesondere von mindestens 0,1 m/s fließt.

4. Abwasserreinigungsanlage nach einem der vorhergehenden Ansprüche, **dadurch gekennzeichnet, dass** die Abwasserreinigungsanlage (1) mit einer Steuerung (3) ausgestattet ist und die Steuerung (3) einerseits mit das Schmutzwasser beurteilende Sensoren (30, 31, 32) und andererseits mit Ventilen (110, 111, 112, 113, 114), Pumpen (100, 101, 102, 103, 104, 105, 107) oder anderen Elementen, wie z.B. einer Speichervorrichtung zur Dokumentation der von den Sensoren (30, 31, 32) ermittelten Messwerten, datentechnisch verbunden ist und steuerungstechnisch zusammenwirkt.

5. Abwasserreinigungsanlage nach einem der vorhergehenden Ansprüche, **dadurch gekennzeichnet, dass** eine drahtgebundene und/oder eine drahtlose datentechnische Verbindung zwischen der Steuerung (3) einerseits und den Sensoren (30, 31, 32), Ventilen (110, 111, 112, 113, 114), Pumpen (100, 101, 102, 103, 104, 105, 107) und/oder anderen Elementen, wie zum Beispiel ein das Schutzwasser erzeugendes Reinigungsgerät, vorgesehen ist und/oder ein Eingabefeld (39), z.B. für die Eingabe von für den Betrieb der Abwasserreinigungsanlage (1) benötigten Parameter oder die Auswahl von Programmen, vorgesehen ist, die drahtgebunden und / oder durch eine drahtlose datentechnische Verbindung mit der Steuerung (3) verbunden ist.

6. Abwasserreinigungsanlage nach einem der vorhergehenden Ansprüche, **dadurch gekennzeichnet, dass** an oder in der Schmutzwasserzuleitung (20), vor dem Puffertank (2), ein mit einer Steuerung (3) datentechnisch verbundener Schmutzwassersensor, insbesondere ein Trübungssensor (31) oder ein Durchflussmesssensor angeordnet ist und/oder sich in Fließrichtung des gefilterten Schmutzwassers nach dem Filter (7) ein mit einer Steuerung (3) datentechnisch verbundener Schmutzwassersensor, insbesondere ein Trübungssensor (30) an oder in der Fließleitung (70) des gefilterten Schmutzwassers angeordnet ist.

7. Abwasserreinigungsanlage nach einem der vorhergehenden Ansprüche, **dadurch gekennzeichnet, dass** die Dosierstation (4) mit der Steuerung (3) datentechnisch verbunden ist und die Steuerung (3) in Abhängigkeit der Schmutzwasserqualität, insbesondere der Trübung des Schmutzwassers, an der Dosierstation (4) die Dosierung des Flockungsmittels einstellt und/oder die Abwasserreinigungsanlage (1) eine, insbesondere mit einem Ventil absperrbare, Frischwasserzuleitung (88) aufweist.

8. Abwasserreinigungsanlage nach einem der vorhergehenden Ansprüche, **dadurch gekennzeichnet, dass** sich in Fließrichtung des gefilterten Schmutzwassers nach dem Klarwassertank (8), insbesondere durch die Klarwasserableitung (80) verbunden, ein Frischwassertank (89) vorgesehen ist, an dem die Frischwasserzuleitung (88) angeschlossen ist und/oder an oder in der Frischwasserzuleitung (88) ein mit der Steuerung (3) datentechnisch verbundener Frischwassersensor, insbesondere ein Trübungssensor (32) oder ein Durchflussmesssensor angeordnet ist und/oder die Abwasserreinigungsanlage (1) eine Dosierstation (40) aufweist, welche dafür vorgesehen ist, Reinigungsmittel, Desinfektionsmittel und/oder Biozide vorzuhalten und/oder die Abwasserreinigungsanlage (1) eine Dosierstation (41) aufweist, welche dafür vorgesehen ist, Entschäumer vorzuhalten und diese Dosierstation/en (40, 41) mit der Steuerung (3) datentechnisch verbunden ist/sind.

9. Abwasserreinigungsanlage nach einem der vorhergehenden Ansprüche, **dadurch gekennzeichnet, dass** der Filter (7) als Bandfilter ausgebildet ist und/oder neben dem Filter (7) ein Auffangbehälter für die in Flocken gebundenen Schmutzpartikel vorgesehen ist.

10. Abwasserreinigungsanlage nach einem der vorhergehenden Ansprüche, **dadurch gekennzeichnet, dass** die Abwasserreinigungsanlage (1) im Puffertank (2), Klarwassertank (8) und / oder Frischwassertank (89) je einen Pegelsensor (P1,P2) aufweist, der/die datentechnisch mit der Steuerung (3) verbunden ist/sind und/oder der Puffertank (2) einen schrägen bzw. geneigten Boden aufweist.

11. Abwasserreinigungsanlage nach einem der vorhergehenden Ansprüche, **dadurch gekennzeichnet, dass** als Flockungsmittel eine Polyaluminiumchlorid-Lösungen, ein anionische Flockungshilfsmittel, wie z.B. Polyacrylate oder Polymethylacrylate, ein kationisches Flockungshilfsmittel, wie z.B. Polyethylenimin, polymere Verbindungen mit quarternären Ammoniumverbindungen, ein mineralisches Flockungsmittel wie z.B. Metallsalze, Aluminiumsulfat, Eisen(III)chlorid, Aluminiumchlorid und / oder nichtionogene Polymere, wie z.B. Polyacrylamid, Polyvinylalkohol, Polyethylenoxid vorgesehen ist/sind.

12. Abwasserreinigungsanlage nach einem der vorhergehenden Ansprüche, **dadurch gekennzeichnet, dass** eine Heizung für das Flockungsmittel und/oder die das Flockungsmittel leitenden Leitungen und/oder den Puffertank (2) vorgesehen ist.

13. Abwasserreinigungsanlage nach einem der vorhergehenden Ansprüche, **dadurch gekennzeichnet, dass** sich alle Elemente der Abwasserreinigungsanlage (1) auf einem oder mehreren selbstfahrenden Fahrzeug/e oder auf einem oder mehreren, durch ein selbstfahrendes Fahrzeug gezogene/n Anhänger (10) angeordnet sind.

14. Verwendung einer Abwasserreinigungsanlage nach einem der vorhergehenden Ansprüche für die Reinigung von mit Mikroplastik verschmutztem Schmutzwasser, wobei insbesondere als Filter ein Bandfilter und als Flockungsmittel ein anionisches, ein mineralisches oder ein nichtionogenes Flockungsmittel verwendet wird .

15. Verfahren zur Reinigung des bei der Reinigung insbesondere von Sportplätzen anfallenden Schmutzwasser mit einer Abwasserreinigungsanlage, insbesondere nach einem der vorhergehenden Ansprüche 1 bis 13, wobei
- verunreinigtes Schmutzwasser in mindestens einem eingangsseitigen Puffertank gesammelt wird und
- andauernd in diesem umgerührt wird und
- in Fließrichtung des verunreinigten Schmutzwassers nach dem Puffertank eine Mischereinheit vorgesehen ist,
- die aus einer in einer Dosierstation vorgehaltenem Flockungsmittel dosierbar dem Schmutzwasser zumischt und
- hernach in mindestens einem Reaktor die sich im Schmutzwasser befindlichen Schmutzpartikel mit dem Flockungsmittel zu abfiltrierbaren Flocken verbinden,
- die dann in einem Filter von dem zu reinigenden Schmutzwasser abfiltriert werden.
